Europäisches Patentamt

European Patent Office

Office européen des brevets

(19)

(11) Veröffentlichungsnummer: **0 151 398**
**B1**

(12) **EUROPÄISCHE PATENTSCHRIFT**

(45) Veröffentlichungstag der Patentschrift:
08.02.89

(21) Anmeldenummer: 85100247.7

(22) Anmeldetag: 12.01.85

(51) Int. Cl.⁴: **B 01 D 53/34, F 23 J 15/00**

(54) **Verfahren und Vorrichtung zur Rauchgasentschwefelung bei Heizölfeuerungen.**

(30) Priorität: **18.01.84 DE 3401471**

(43) Veröffentlichungstag der Anmeldung:
**14.08.85 Patentblatt 85/33**

(45) Bekanntmachung des Hinweises auf die Patenterteilung:
**08.02.89 Patentblatt 89/6**

(84) Benannte Vertragsstaaten:
**AT BE CH DE FR GB LI LU NL SE**

(56) Entgegenhaltungen:
**EP-A- 0 097 631**
**DE-A- 3 009 385**
**GB-A- 2 055 056**

(73) Patentinhaber: **Deutsche Forschungs- und
Versuchsanstalt für Luft- und Raumfahrt e.V.,
D-5300 Bonn (DE)**

(72) Erfinder: **Farago, Zoltan, Burgstallstrasse 77,
D-6962 Adelsheim-Sennfeld (DE)**
Erfinder: **Buschulte, Winfried, Prof. Dr.,
Herzog-Friedr.-Strasse 14, D-7106 Neuenstadt (DE)**

(74) Vertreter: **Hoeger, Stellrecht & Partner,
Uhlandstrasse 14 c, D-7000 Stuttgart 1 (DE)**

**Beschreibung**

Die Erfindung betrifft ein Verfahren zur Rauchgasentschwefelung bei Heizöl-Haushaltsfeuerungen nach dem Oberbegriff des Patentanspruchs 1. Ausserdem betrifft die Erfindung eine Vorrichtung zur Durchführung eines solchen Verfahrens.

Bei bekannten Verfahren dieser Art (DE-A-3 009 385, EP-A-097 631) wird bei der Entschwefelung Schwefeldioxid in Form von Sulfit gelöst. Da aber Sulfit infolge bekannter Gleichgewichtsreaktionen ausserhalb der Entschwefelungsanlage als $SO_2$ wieder in die Atmosphäre zurückgelangt, ist durch die Bildung von Sulfit an sich noch keine echte Entschwefelung erreicht.

Es ist Aufgabe der Erfindung, ein gattungsgemässes Verfahren so zu verbessern, dass der Schwefel in eine Form überführt wird, die ein Zurückgelangen des Schwefels in die Atmosphäre zuverlässig verhindert.

Die Aufgabe wird durch die kennzeichnenden Merkmale des Patentanspruchs 1 gelöst.

Eine Vorrichtung zur Durchführung des erfindungsgemässen Verfahrens ist im Patentanspruch 8 niedergelegt.

Die nachstehende Beschreibung bevorzugter Ausführungsformen der Erfindung dient im Zusammenhang mit beiliegender Zeichnung der weiteren Erläuterung. Es zeigen:

Fig. 1 schematisch eine Heizöl-Haushaltsfeuerung mit Restwärmetauscher und Rauchgasentschwefelung;

Fig. 2 schematisch eine abgewandelte Vorrichtung zur Rauchgasentschwefelung für eine Haushalts-Heizölfeuerung und

Fig. 3 und Fig. 4 gegenüber Fig. 2 weiterhin abgewandelte Rauchgasentschwefelungsvorrichtungen.

Beim Verbrennen von Heizöl EL mit einem Schwefelgehalt von ca. 0,3%, wie es insbesondere in Haushaltsfeuerungen eingesetzt wird, verbrennen bei einem Luftüberschuss von $\lambda = 1,05$ etwa 3% des im Heizöl enthaltenen Schwefels zu $SO_3$ und die restlichen etwa 97% zu $SO_2$. Bei Heizölfeuerungen mit einem dem Kessel nachgeschalteten, vom Rauchgas durchströmten Restwärmetauscher bildet sich in letzterem ein Kondensat. Das im Rauchgas enthaltene $SO_3$ wird in diesem Kondensat aufgelöst und verschiebt den pH-Wert auf ca. 2,5, d.h. ins stark saure Gebiet. Bei diesem pH-Wert und bei dem niedrigen Partialdruck des $SO_2$ kann von diesem im Kondensat höchstens 1% ausgewaschen werden.

Das Prinzip des erfindungsgemässen Verfahrens besteht darin, zum Zwecke einer höheren $SO_2$-Auswaschung den pH-Wert des Kondensats entsprechend anzuheben. Hierzu gibt man dem Kondensat laufend ein Neutralisationsmittel zu und rezirkuliert das neutralisierte Kondensat zwecks Auflösung von Schwefeldioxid in den Restwärmetauscher. Der pH-Wert des neutralisierten Kondensats kann zwischen 5 und 8, vorzugsweise zwischen 7 und 7,5, insbesondere bei 7,5, liegen. Es wurde gefunden, dass auf diese Weise im Kondensat, beispielsweise bei einem pH-Wert von ca. 7,5 bis über 70% des Schwefeldioxids im Kondensat gelöst werden können. Die Sulfatkonzentration im Kondensat beträgt dann 4000 bis 5000 mg/l. Durch Verdünnung des sulfathaltigen Kondensats mit Wasser, insbesondere Abwasser, auf das etwa Zehn- bis Fünfzehnfache, kann das Kondensat gefahrlos in die öffentliche Kanalisation abgeleitet werden, so dass sich die beschriebene Rauchgasentschwefelung insbesondere für Haushaltsfeuerungen eignet.

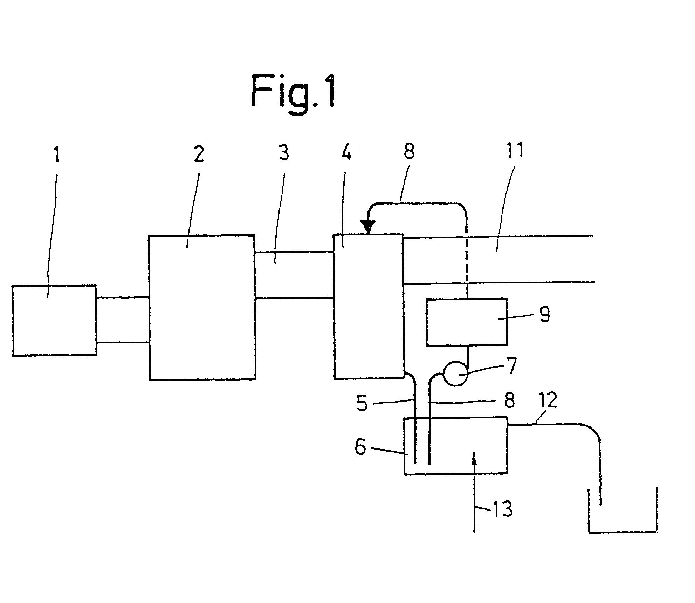

In Fig. 1 ist schematisch eine Vorrichtung zur Durchführung des beschriebenen Entschwefelungsverfahrens dargestellt. Ein Heizölbrenner 1 beheizt einen üblichen Wasserkessel 2, beispielsweise einer Warmwasser-Zentralheizung. Das aus dem Kessel 2 über eine Leitung 3 austretende, schwefelhaltige Rauchgas durchströmt zur Verbesserung der Energiebilanz in an sich bekannter Weise noch einen Restwärmetauscher 4, in dem das Rauchgas z.B. auf etwa 30 bis 35 °C abgekühlt wird. Die abgegebene Wärme wird beispielsweise an das in einem Heizungsrücklauf zurückfliessende Wasser abgegeben und auf diese Weise ausgenutzt. Bei der Abkühlung des Rauchgases auf die genannte niedere Temperatur kondensieren ca. 850 bis 1000 ml Wasser je Kilogramm Heizöl und bilden ein sogenanntes «Kondensat». Das Kondensat strömt über eine Leitung 5 aus dem Restwärmetauscher 4 in einen Auffangbehälter 6. In dem Kondensat hat sich das im Rauchgas enthaltene $SO_3$ gelöst. Hierdurch hat das Kondensat einen pH-Wert von 2,5. Das saure Kondensat wird aus dem Auffangbehälter 6 durch eine Pumpe 7 über eine Rezirkulationsleitung 8 in den Restwärmetauscher zurückgeführt. Die Rezirkulationsleitung 8 enthält einen mit Neutralisationsmittel gefüllten Behälter 9. Das zurückfliessende, saure Kondensat wird durch im Behälter 9 aufgenommenes Neutralisationsmittel neutralisiert, so dass es beim Wiedereinströmen in den Restwärmetauscher 4 beispielsweise einen pH-Wert von 7,5 hat und also basisch ist. Im rezirkulierten, neutralisierten Kondensat lösen sich mindestens 70% des im Rauchgas enthaltenen $SO_2$, das auf diese Weise ausgewaschen wird. Das gekühlte und von Schwefel befreite Rauchgas strömt über eine Leitung 11 (und einen nicht dargestellten Kamin) in die Atmosphäre ab.

Der Restwärmetauscher 4 ist in herkömmlicher Weise an die Kondensat-Rezirkulation angepasst, so dass er als Gaswäscher wirkt. Er enthält hierzu einen üblichen Kondensatverteiler, um die für die $SO_2$-Auswaschung notwendige, gleichmässige Kondensatberieselung der Wärmetauscherflächen zu gewährleisten. Bei Haushalts-Heizölfeuerungen ist beispielsweise ein Kondensat-Volumenstrom von etwa 30 bis 40 l/h vorteilhaft.

Der Auffangbehälter 6 ist mit einer herkömmlichen Überströmeinrichtung ausgestattet, über welche überschüssiges, schwefelhaltiges Kondensat durch eine Leitung 12 abströmt. Im Auffangbehälter 6 kann sich im übrigen das zunächst aus dem $SO_2$ entstehende Sulfit in unschädliches Sulfat umwandeln. Die Umwandlung kann durch Einleitung von Luft über eine Leitung 13 in den Behälter 6 beschleunigt werden.

Der Behälter 9 enthält als Neutralisationsmittel vorzugsweise MgO, CaO und/oder NaOH, obwohl auch andere Mittel für den genannten Zweck geeignet sind.

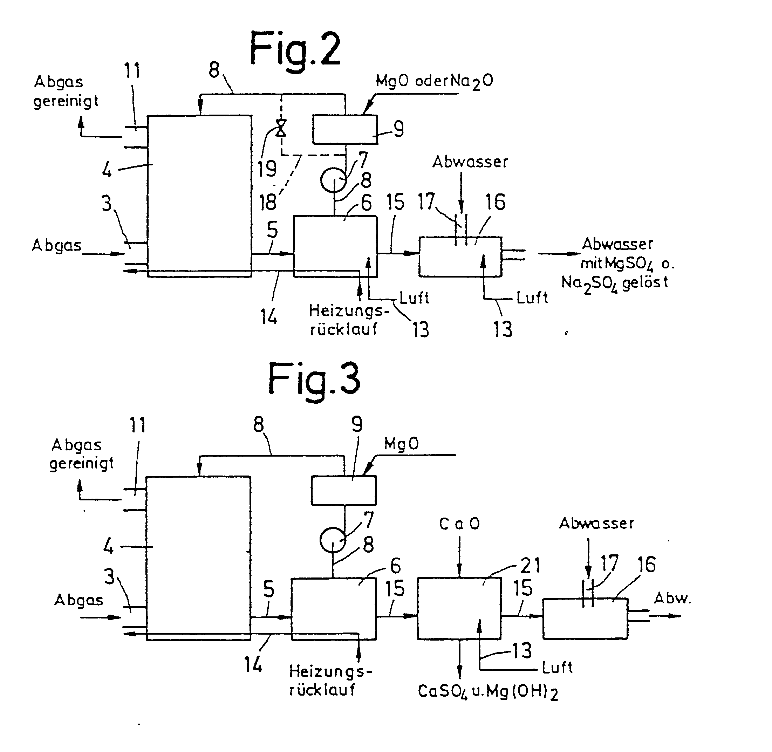

Die Fig. 2 zeigt eine gegenüber Fig. 1 etwas abgewandelte Vorrichtung zur Rauchgasentschwefelung, insbesondere bei Haushalts-Heizölfeuerungen. Einander entsprechende Teile sind jeweils mit den gleichen Bezugzeichen versehen. In Fig. 2 ist zusätzlich ein üblicher Heizungsrücklauf 14 eingezeichnet, der zur vollkommenen Restwärmeausnutzung sowohl durch den Restwärmetauscher 4 als auch durch den Auffangbehälter 6 geführt ist. Wie weiterhin in Fig. 2 dargestellt, gelangt das schwefelhaltige Kondensat aus dem Auffangbehälter 6 über eine Leitung 15 in einen Pufferbehälter 16. Sowohl dem Auffangbehälter 6 als auch dem Pufferbehälter 16 kann zur Verbesserung der Sulfit-Sulfat-Umwandlung über eine Leitung 13 Luft zugeführt werden. In den Pufferbehälter 16 wird über eine Leitung 17 Haushalts-Abwasser zugeführt. Hierdurch wird das sulfathaltige Kondensat im Behälter 16 so weit verdünnt, dass eine Ableitung des sulfathaltigen Kondensats in die öffentliche Abwasserkanalisation möglich ist. Erlaubte Sulfatkonzentrationen im Abwasser liegen beispielsweise zwischen etwa 400 und 600 mg/l. Wenn, wie in Fig. 2 angegeben, als Neutralisationsmittel Magnesiumoxid oder eine Natriumverbindung, z.B. $Na_2O$, NaOH oder $Na_2CO_3$ verwendet wird, gelangt in die Kanalisation schliesslich gelöstes Magnesium- oder Natriumsulfat.

Wie in Fig. 2 gestrichelt dargestellt, kann bei einer abgewandelten Ausführungsform ein Teil des rezirkulierenden Kondensats durch eine Bypassleitung 18 um den Neutralisationsbehälter 9 herum geführt werden. Die Bypassleitung 18 enthält ein steuer- oder regelbares Ventil 19. Auf diese Weise kann der pH-Wert des rezirkulierenden Kondensats auf einen bestimmten Wert eingestellt oder eingeregelt werden. Arbeitet man im sauren Gebiet, etwa bei einem pH-Wert zwischen 5 und 5,5, so lässt sich die Umwandlung von $SO_2$ zu Sulfat auch ohne zusätzliche Lufteinleitung beschleunigen.

Grundsätzlich kann man bei pH-Werten des Kondensats zwischen 5 und 8 arbeiten. Wird saures Kondensat rezirkuliert, so muss der Restwärmetauscher 4 in Edelstahl oder einem anderen korrosionsfesten Material ausgebildet sein. Arbeitet man hingegen im neutralen oder basischen Bereich, beispielsweise bei einem pH-Wert von 7,5, so kann der Restwärmetauscher 4 in Normalstahl ausgeführt sein, was im Hinblick auf die Herstellungskosten des Restwärmetauschers 4 erheblich ins Gewicht fällt, und zwar insbesondere auch im Hinblick auf herkömmliche Feuerungen ohne Kondensat-Rezirkulation, bei denen der Restwärmetauscher 4 wegen des dort anfallenden sauren Kondensats ebenfalls aus Edelstahl oder dergleichen bestehen muss.

Bei einer Neutralisation mit Magnesiumoxid ist eine pH-Wert-abhängige Dosierung des Neutralisationsmittels nicht erforderlich. Eine Einstellung oder Einregulierung des pH-Werts empfiehlt sich jedoch bei Verwendung von wasserlöslichem Neutralisationsmittel, beispielsweise Natronlauge.

Bei der in Fig. 3 dargestellten Vorrichtung, die weitgehend der Vorrichtung gemäss Fig. 2 entspricht, ist in die Leitung 15 zwischen Auffangbehälter 6 und Pufferbehälter 16 ein Sulfatabscheider 21 angeordnet, in dem über eine Leitung 13 wiederum Luft eingeleitet werden kann. Im Sulfatabscheider 21 wird beispielsweise durch Zugabe von CaO, Kalkmilch oder $Ca(OH)_2$ unlösliches Kalziumsulfat (Gips) und Magnesiumhydroxid gebildet. Diese Stoffe fallen aus, so dass in diesem Falle kein oder erheblich weniger Sulfat in das Abwasser gelangt.

Ein Hauptvorteil der Erfindung besteht darin, dass die Entschwefelung und die Restwärmenutzung in ein und demselben Gerät, nämlich dem Restwärmetauscher 4, ausgeführt werden kann. Das Kondensat kann mit billigem Neutralisationsmittel, insbesondere Magnesiumoxid, neutralisiert werden. Erfolgt die Neutralisierung bis ins basische Gebiet, so ist es möglich, für die Herstellung des Restwärmetauschers 4 statt dem bisher verwendeten, teuren austenitischem Werkstoff (Edelstahl) kostengünstigere ferritische Werkstoffe (Normalstahl) einzusetzen. Ein weiterer grosser Vorteil besteht darin, dass die im Kondensat enthaltenen Sulfate nicht entfernt werden müssen, sondern nach Verdünnung mit Wasser in die öffentliche Kanalisation geleitet werden können. Dies ist insbesondere für Haushaltsfeuerungen günstig. Die Verdünnung des sulfathaltigen Kondensats erfolgt dabei günstigerweise mit Haushaltsabwasser. Schliesslich ist zu beachten, dass die Gesamtwärmebilanz der Vorrichtung durch die Zuführung von Neutralisationsmittel nicht beeinträchtigt wird. Durch die Erhöhung der Gesamtverweilzeit des sulfithaltigen Kondensats in der Vorrichtung wird die Aufoxidation der Sulfit-Ionen zu Sulfat-Ionen weitgehend abgeschlossen, bevor das Kondensat in die Kanalisation gelangt.

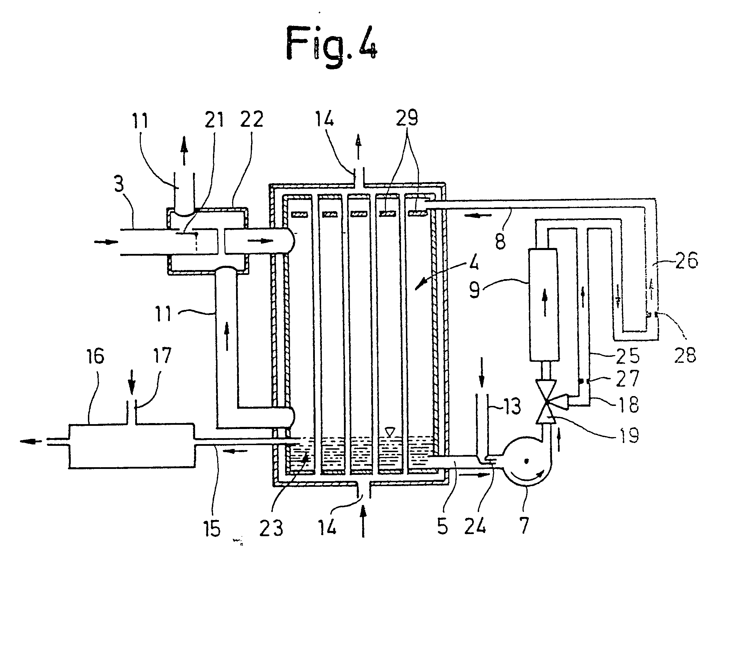

In Fig. 4 ist eine weitere bevorzugte Ausführungsform einer erfindungsgemässen Rauchgasentschwefelungsvorrichtung für eine Haushaltsfeuerung dargestellt, die sich in der Praxis besonders bewährt hat. Einander entsprechende Teile der Vorrichtung tragen in Fig. 4 die selben Bezugzeichen wie in Fig. 2 und 3. Insbesondere eignet sich die Vorrichtung gemäss Fig. 4 für eine verbesserte Sulfit-Aufoxidation zu Sulfat bei gleichzeitiger Verringerung des apparativen Aufwandes. Ferner enthält die Vorrichtung gemäss Fig. 4 einige Verbesserungen, die entweder den Entschwefelungsgrad verbessern oder die Anwendung der erfindungsgemässen Rauchgasentschwefelung auch bei bereits vorhandenen Heizöl-Haushaltsfeuerungen mit herkömmlichen Kaminen oder Schornsteinen ermöglichen.

Ein erster wesentlicher Unterschied gegenüber Fig. 2 und 3 ist ein bei der Vorrichtung gemäss Fig. 4 vorgesehener Rauchgas-Bypass in Gestalt einer in der vom Brenner und Kessel herkommenden Abgasleitung 3 angeordneten Klappe 21, die in Pfeilrichtung in die punktiert dargestellte Lage verschwenkbar ist. Befindet sich die Klappe 21 in ihrer mit einer ausgezogenen Linie dargestellten Lage, so liegt Normalbetrieb entsprechend Fig. 2 vor, d.h. die Abgase gelangen über die Leitung 3 direkt in den Restwärmetauscher 4. Befindet sich hingegen die Klappe 21 in ihrer punktiert dargestellten Stellung, so versperrt sie den zum Restwärmetauscher 4 führenden Teil der Abgasleitung 3 und die Abgase gelangen direkt in die zu einem Kamin oder einen Schornstein führende Leitung 11. In diesem Falle werden also die Abgase am Restwärmetauscher 4 vorbeigeführt.

Dies dient als Schutz der Vorrichtung im Sommerbetrieb, wenn die Heizungsanlage nur für Brauchwasser und nicht für die Erwärmung von Heizkörpern eingesetzt wird. Bei dieser Betriebsart entsteht insbesondere kein aus den Heizkörpern stammender Heizungsrücklauf, der über die Leitung 14 den Restwärmetauscher 4 durchdringt. Bei dieser Betriebsart ist somit auch keine Restwärmenutzung und auch keine Rauchgasentschwefelung möglich. Durch die abgasseitige Abkopplung des Restwärmetauschers 4 infolge Überführung der Klappe 21 in ihre punktiert dargestellte Stellung kann im Restwärmetauscher kein unerwünschter Temperatur- oder Druckanstieg entstehen.

Wie dargestellt, ist die Abgasleitung 3 im Bereich der Klappe 21 von einem beidseits geschlossenen Rohr 22 grösseren Durchmessers umgeben, welches einen Teil der Leitung 11 bildet. Somit umströmen die aus dem Wärmetauscher 4 austretenden, entschwefelten und durch die Leitung 11 strömenden Abgase die Abgasleitung 3, welche heisses Abgas führt. Die über die Leitung 11 in den Schornstein oder Kamin eingeleiteten Abgase werden somit im Bereich des Rohres 22 durch die in der Abgasleitung 3 strömenden Gase erwärmt. Die Temperatur der Abgase in der Leitung 3 kann beispielsweise etwa 200 °C betragen. Wenn die entschwefelten Abgase mit einer Temperatur von etwa 30 °C aus dem Restwärmetauscher 4 austreten, können sie nach dem Verlassen des Rohres 22 eine Temperatur von etwa 50 °C haben, also um etwa 20 °C erhöht sein. Eine solche Temperaturerhöhung um etwa 10–20 °C reicht aus, um das entschwefelte, unterkühlte und daher mit Wasserdampf gesättigte Abgas in der Leitung 11 zu trocknen. Im Schornstein oder Kamin tritt daher keine schädliche Kondensatbildung auf. Ausserdem wird durch die Temperaturerhöhung des Abgases in der Leitung 11 dem Abgas ein ausreichender Auftrieb erteilt, so dass kein gasdichter Schornstein oder Kamin erforderlich ist. Die beschriebene Überhitzung des unterkühlten und mit Wasserdampf gesättigten Abgases in der Leitung 11 wird im Normal- oder Winterbetrieb der Heizungsanlage ausgeführt.

Ein weiterer Unterschied zwischen Fig. 2 und 3 einerseits und Fig. 4 andererseits besteht darin, dass bei der Vorrichtung gem. Fig. 4 der Kondensat-Auffangbehälter 6 entfallen ist. Statt dessen sammelt sich das Kondensat unmittelbar am Boden des Restwärmetauschers 4 in einem Sumpfbereich 23 an, von dem einerseits die Leitung 5 und andererseits die Leitung 15 abgehen. Dieser Sumpfbereich 23 ist nicht nur eine Vereinfachung der Apparatur, sondern auch von Vorteil für die Wärmebilanz der gesamten Feuerungsanlage. Bei den Ausführungsformen gemäss Fig. 2 und 3 ist eine gute Aussen-Wärmedämmung am Auffangbehälter 6 und ein guter innerer Wärmetausch zum Heizungsrücklauf notwendig, um die Wärmemenge des rezirkulierenden Kondensates dem Heizungssystem zuzuführen. All dies erfolgt bei der Vorrichtung gemäss Fig. 4 im Restwärmetauscher 4.

Wie in Fig. 4 weiterhin dargestellt, erfolgt die Luftzufuhr über die Leitung 13 direkt in die Saugseite der Kondensatpumpe 7. Hierdurch ist die Möglichkeit gegeben, die für die Sulfit-Weiteroxidation benötigte Luftmenge dem Kondensat-Rezirkulationskreislauf (Leitungen 5, 8 und 18) zuzudosieren. Wie dargestellt, speist die Leitung 13 eine in der Kondensatleitung 5 angeordnete Luftinjektionsdüse 24 mit kleinem Öffnungsquerschnitt. Hierdurch treten besonders zahlreiche und kleine Luftblasen in das Kondensat ein, die einen grossen Oberflächenkontakt mit dem Kondensat herstellen und somit einen guten Sauerstoffaustausch vermitteln.

Die Leitung 13 kann zur Atmosphäre hin offen sein, so dass die Strömung des Kondensats in der Leitung 5 die Luft frei über die Düse 24 ansaugt. Bei einer anderen Ausführungsform kann die Leitung 13 auch mit einem am Brenner 1 (Fig. 1) vorgesehenen Gebläse verbunden sein, so dass in der Leitung 13 der Luftdruck des Brennergebläses herrscht. Mit diesem Druck tritt die Luft aus der Düse 24 aus.

Auch die der Düse 24 unmittelbar nachgeschaltete Kondensatpumpe 7 sorgt für eine erneute Zerkleinerung der inzwischen wieder zusammengewachsenen Luftbläschen und vermittelt somit eine weitere intensive Durchrührung des Kondensates mit Luft.

Die nach oben ansteigenden, eine nach aufwärts gerichtete Strömung enthaltenden Leitungsteile 25, 26 der Kondensat-Rezirkulationsleitung 8 enthalten, wie in Fig. 4 dargestellt, Blenden 27 bzw. 28, die den Querschnitt in diesen Leitungsteilen verengen. Auch hierdurch werden die mitgeführten Luftbläschen wieder verkleinert und mit Kondensat durchmischt, wodurch ebenfalls die Aufoxidation von $SO_3$ günstig beeinflusst wird.

Die Anordnung der Luftinjektionsdüse 24, die enge Zusammenschaltung dieser Düse mit dem Saugstutzen der Pumpe 7 und die Anordnung der Blenden 27, 28 bewirken insgesamt eine so intensive Sauerstoffübertragung aus der Luft in die Sulfit-Sulfat-Lösung, dass die normalerweise nur bei «saurer Betriebsweise» im pH-Bereich von 5 bis 5,5 eintretende, rasche Aufoxidation auch bei einem pH-Wert zwischen 6,5 und 7,5 stattfindet. Somit ist auch eine «neutrale Betriebsweise» möglich.

Damit sind die Vorteile der sauren Betriebsweise, nämlich insbesondere ein hoher Sulfatisierungsgrad, verbunden mit den Vorteilen der alkalischen Betriebsweise, nämlich Korrosionsschutz der Vorrichtung, insbesondere des Restwärmetauschers 4.

Schliesslich ist in Fig. 4 noch eine Möglichkeit schematisch angegeben, wie das Kondensat besonders gleichmässig im Restwärmetauscher 4 verteilt werden kann. Hierzu ist im Wärmetauscher 4 oben ein Zwischenboden 29 angeordnet, auf den das Kondensat aus der Leitung 8 gelangt. Vom Zwischenboden 29 aus verteilt sich das Kondensat gleichmässig auf die Aussenseiten der den Heizungsrücklauf führenden Leitungsteile, die mit der Leitung 14 verbunden sind. Die so gleichmässig mit Kondensat beschickten Leitungsteile werden von dem Abgas aus der Leitung 3 umströmt, so dass der Schwefel in das gleichmässig verteilte Kondensat übergehen kann. Es wurde gefunden, dass sich aufgrund einer solchen gleichmässigen Kondensatverteilung im Restwärmetauscher 4 Entschwefelungsgrade über 90% realisieren lassen.

Eine andere Möglichkeit, das Kondensat gleichmässig im Wärmetauscher 4 zu verteilen, besteht darin, das Kondensat über Düsen, insbesondere Flachstrahldüsen, in den Restwärmetauscher einzubringen und es gleichmässig auf die Wärmetauscherflächen aufzusprühen.

**Patentansprüche**

1. Verfahren zur Rauchgasentschwefelung bei Heizöl-Haushaltsfeuerungen mit einem Heizölbrenner, mit einem von diesem Brenner beheizten Kessel und mit einem dem Kessel nachgeschalteten, Kondensatwasser bildenden Restwärmetauscher, wobei man als Entschwefelungsmittel ausschliesslich das im Restwärmetauscher gebildete Kondensatwasser benutzt und das durch Zugabe eines Neutralisationsmittels neutralisierte Kondensatwasser zwecks Auflösung von Schwefeldioxid in Form von Sulfit in den Restwärmetauscher rezirkuliert, dadurch gekennzeichnet, dass man den pH-Wert des Kondensatwassers durch Zugabe des Neutralisationsmittels zwischen 5 und 8 hält, zur Umwandlung des Sulfits in Sulfat Luft in das Kondensatwasser einleitet und überschüssiges sulfathaltiges Kondensatwasser abführt.

2. Verfahren nach Anspruch 1, dadurch gekennzeichnet, dass man auf einen pH-Wert von 7 bis 7,5, insbesondere 7,5 neutralisiert.

3. Verfahren nach Anspruch 1 oder 2, dadurch gekennzeichnet, dass man das rezirkulierende Kondensat nach Erreichen einer bestimmten Sulfatkonzentration mit Wasser verdünnt und in die Abwasser-Kanalisation leitet.

4. Verfahren nach Anspruch 3, insbesondere bei Haushalts-Heizölfeuerungen, dadurch gekennzeichnet, dass man das sulfathaltige Kondensat vor Einleitung in die Kanalisation mit Abwasser verdünnt.

5. Verfahren nach einem der Ansprüche 1 bis 4, dadurch gekennzeichnet, dass man als Neutralisationsmittel MgO, CaO und/oder NaOH verwendet.

6. Verfahren nach einem der voranstehenden Ansprüche, dadurch gekennzeichnet, dass man das Kondensat zwecks Weiteroxidation von Sulfit zu Sulfat in einen Pufferbehälter überführt und in diesem Behälter mit Wasser verdünnt.

7. Verfahren nach Anspruch 3, 4 oder 6, dadurch gekennzeichnet, dass man vor der Verdünnung des Kondensats mit Wasser Sulfat ausscheidet.

8. Vorrichtung zur Durchführung des Verfahrens nach Anspruch 6 und 7 bei einer Heizölfeuerung mit einem Restwärmetauscher und mit einem Auffangbehälter für das aus dem Restwärmetauscher austretende Kondensat, wobei in einer vom Auffangbehälter (6) in den Restwärmetauscher (4) zurückführenden Kondensat-Rezirkulationsleitung (8) eine Pumpe (7) und ein mit Neutralisationsmittel gefüllter Behälter (9) angeordnet sind, dadurch gekennzeichnet, dass dem Auffangbehälter (6) ein mit einer Wasserleitung (17) verbundener Pufferbehälter (16) nachgeschaltet ist, dass zwischen Auffangbehälter (6) und Pufferbehälter (16) ein Sulfatabscheider (21) angeordnet ist, und dass Mittel (13) zur Einleitung von Luft in das Kondensatwasser vorgesehen sind.

9. Vorrichtung nach Anspruch 8, dadurch gekennzeichnet, dass der Restwärmetauscher (4) aus ferritischem Werkstoff (Normalstahl) besteht.

10. Vorrichtung nach Anspruch 8, dadurch gekennzeichnet, dass dem Restwärmetauscher (4) ein Überhitzer (Rohr 22) vorgeschaltet ist, in dem das in den Restwärmetauscher eintretende, $SO_2$-haltige Abgas das aus dem Tauscher (4) austretende, gekühlte und von $SO_2$ befreite Abgas erwärmt und trocknet.

11. Vorrichtung nach Anspruch 8, gekennzeichnet durch eine Bypass-Vorrichtung (Klappe 21), mit welcher das $SO_2$-haltige Abgas am Restwärmetauscher (4) vorbei direkt in die zu einem Kamin oder Schornstein führende Leitung (11) einleitbar ist.

12. Vorrichtung nach Anspruch 8, dadurch gekennzeichnet, dass als Auffangbehälter für Kondensat ein im Restwärmetauscher (4) unten gelegener Sumpfbereich (23) vorgesehen ist.

13. Vorrichtung nach Anspruch 8, dadurch gekennzeichnet, dass in der Kondensat-Rezirkulationsleitung (5, 8) im wesentlichen unmittelbar vor dem Saugstutzen der Pumpe (7) eine Luftinjektionsdüse (24) angeordnet ist.

14. Vorrichtung nach Anspruch 13, dadurch gekennzeichnet, dass der Luftinjektionsdüse (24) die Luft mit dem vom Brennergebläse der Heizölfeuerung erzeugten Druck zugeführt ist.

15. Vorrichtung nach Anspruch 8, dadurch gekennzeichnet, dass in nach oben aufsteigenden Teilen (25, 26) der Kondensat-Rezirkulationsleitung (5, 8) Engstellen (Blenden 27, 28) zur Zerkleinerung von Luftblasen vorgesehen sind.

16. Vorrichtung nach Anspruch 8, dadurch gekennzeichnet, dass im Restwärmetauscher (4) oben ein Zwischenboden (29) zur gleichmässigen Verteilung des Kondensats auf die den Heizungsrücklauf führenden Leitungen angeordnet ist.

## Claims

1. A process for removal of sulphur from combustion gas from domestic fuel oil combustion systems with a fuel oil burner having a boiler heated by this burner and with a waste heat exchanger, which forms condensation water, connected to the outlet from the boiler, whereby the condensation water formed in the waste heat exchanger is exclusively used as the sulphur removing agent and the condensation water neutralized by a neutralizing agent in order to dissolve sulphur dioxide in the form of sulphite is recirculated in the waste heat exchanger, characterized in that the pH value of the condensation water is maintained between 5 and 8, air is led into the condensation water to convert the sulphite to sulphate, and excess sulphate-containing condensation water is led off.

2. A process according to Claim 1, characterized in that neutralization is to a pH value of 7 to 7.5, particularly 7.5.

3. A process according to Claim 1 or 2, characterized in that the recirculating condensation water is diluted with water after reaching a predetermined sulphate concentration and led into the waste water drains.

4. A process according to Claim 3, particularly for use with domestic fuel oil combustion systems, characterized in that the sulphate-containing condensate is diluted with waste water before introduction into the drains.

5. A process according to one of Claims 1 to 4, characterized in that MgO, CaO and/or NaOH is used as neutralizing agent.

6. A process according to one of the preceding Claims, characterized in that the condensate is transferred to a buffer tank in order to obtain further oxidation of sulphite to sulphate and is diluted with water in this tank.

7. A process according to Claim 3, 4 or 6, characterized in that sulphate is separated before the dilution of the condensate with water.

8. Apparatus for performing the process according to Claim 6 and 7 with a fuel oil combustion system having a waste heat exchanger and having a collecting tank for the condensate coming from the waste heat exchanger (4), in which a pump (7) and a tank (9) filled with neutralizing agent are arranged in the condensate recirculation pipe system (8) leading back from the collecting tank (6) into the waste heat exchanger (4), characterized in that a buffer tank (16) connected to a water pipe (17) is connected after the collecting tank (6), in that a sulphate separator (21) is situated between the collecting tank (6) and the buffer tank (16), and in that means (13) for introducing air into the condensation water are provided.

9. Apparatus according to Claim 8, characterized in that the waste heat exchanger (4) is made from ferritic material (normal steel).

10. Apparatus according to Claim 8, characterized in that a superheater (tube 22) is connected in front of the waste heat exchanger (4) in which the SO₂-containing waste gas entering the waste heat exchanger warms and dries the cooled waste gas, freed from SO₂, emerging from the heat exchanger (4).

11. Apparatus according to Claim 8, characterized by a bypass arrangement (flap 21) with which the SO₂-containing waste gas going to the waste heat exchanger (4) may be introduced directly into a pipe (11) going to a chimney or flue.

12. Apparatus according to Claim 8, characterized in that a bottom region (23) lying at the bottom in the waste heat exchanger (4) is provided as the collecting tank for the condensate.

13. Apparatus according to Claim 8, characterized in that an air injection jet (24) is arranged in the condensate recirculation pipework (5, 8) substantially immediately in front of the suction connection of the pump (7).

14. Apparatus according to Claim 13, characterized in that air is supplied to the air injection jet (24) with the pressure produced by the burner fan of the fuel oil combustion system.

15. Apparatus according to Claim 8, characterized in that constrictions (orifices 27, 28) to reduce the size of air bubbles are provided in the upward leading parts (25, 26) of the condensate recirculation pipework (5, 8).

16. Apparatus according to Claim 8, characterized in that a false bottom (29) is arranged at the top in the waste heat exchanger (4) for uniform distribution of the condensate on to the tubes leading to the heat return system.

## Revendications

1. Procédé de désulfuration des gaz de combustion des installations de chauffage au fuel domestique comprenant un brûleur à mazout, une chaudière chauffée par ce brûleur et un échangeur de chaleur résiduelle raccordé en aval de la chaudière et produisant de l'eau de condensation, selon lequel on utilise exclusivement, comme agent de désulfuration, l'eau de condensation produite dans l'échangeur de chaleur résiduelle et on recycle dans l'échangeur de chaleur résiduelle l'eau de condensation neutralisée par l'addition d'un agent de neutralisation en vue de la mise en solution de l'anhydride sulfureux sous forme de sulfite, caractérisé en ce qu'on maintient la valeur du pH de l'eau de condensation entre 5 et 8 par l'addition de l'agent de neutralisation, on introduit de l'air dans l'eau de condensation pour transformer le sulfite en sulfate et on évacue l'eau de condensation en excès contenant le sulfate.

2. Procédé selon la revendication 1, caractérisé en ce qu'on effectue la neutralisation à une valeur du pH de 7 à 7,5, en particulier à 7,5.

3. Procédé selon la revendication 1 ou 2, caractérisé en ce qu'on dilue avec de l'eau le condensat recyclé après obtention d'une concentration déterminée en sulfate et on l'envoie dans la canalisation des eaux usées.

4. Procédé selon la revendication 3, en particulier pour les installations domestiques de chauffage au mazout, caractérisé en ce qu'on dilue le condensat contenant le sulfate à l'aide d'eau usée avant son introduction dans la canalisation.

5. Procédé selon l'une des revendications 1 à 4, caractérisé en ce qu'on utilise, comme agent de neutralisation, MgO, CaO et/ou NaOH.

6. Procédé selon l'une des revendications précédentes, caractérisé en ce qu'on transfère le condensat dans un récipient-tampon en vue de poursuivre l'oxydation du sulfite en sulfate, et on le dilue dans ce récipient avec de l'eau.

7. Procédé selon la revendication 3, 4 ou 6, caractérisé en ce qu'on sépare le sulfate avant la dilution du condensat avec de l'eau.

8. Dispositif pour la mise en œuvre du procédé selon les revendications 6 et 7 dans le cas d'une installation de chauffage au mazout comprenant un échangeur de chaleur résiduelle et un récipient-collecteur pour le condensat sortant de l'échangeur de chaleur résiduelle, dans laquelle une pompe (7) et un récipient (9) contenant un agent de neutralisation sont disposés sur une conduite de recirculation du condensat (8) revenant du récipient-collecteur (6) jusqu'à l'échangeur de chaleur résiduelle (4), caractérisé en ce qu'un récipient-tampon (16) relié à une conduite d'eau (17) est monté en aval du récipient-collecteur (6), un séparateur de sulfate (21) est placé entre le récipient-collecteur (6) et le récipient-tampon (16), et des moyens (13) sont prévus pour introduire de l'air dans l'eau de condensation.

9. Dispositif selon la revendication 8, caractérisé en ce que l'échangeur de chaleur résiduelle (4) est en matière ferritique (acier normal).

10. Dispositif selon la revendication 8, caractérisé en ce qu'un surchauffeur (tube 22) est monté en amont de l'échangeur de chaleur résiduelle (4), surchauffeur dans lequel les gaz de combustion contenant $SO_2$, entrant dans l'échangeur de chaleur résiduelle, chauffent et sèchent les gaz de combustion sortant de l'échangeur (4) refroidis et débarrassés de $SO_2$.

11. Dispositif selon la revendication 8, caractérisé par un dispositif de dérivation (volet 21) au moyen duquel les gaz de combustion contenant $SO_2$ peuvent passer directement, en évitant l'échangeur de chaleur résiduelle (4), dans la conduite (11) aboutissant à une cheminée ou une hotte de cheminée.

12. Dispositif selon la revendication 8, caractérisé en ce qu'on prévoit, comme récipient collecteur pour le condensat, une zone de réserve (23) située dans le fond de l'échangeur de chaleur résiduelle (4).

13. Dispositif selon la revendication 8, caractérisé en ce qu'une buse d'injection d'air (24) est placée dans la conduite de recirculation du condensat (5, 8) pratiquement juste avant la tubulure d'aspiration de la pompe (7).

14. Dispositif selon la revendication 13, caractérisé en ce que la buse d'injection d'air (24) est alimentée en air à la pression produite par le ventilateur du brûleur de l'installation de chauffage au mazout.

15. Dispositif selon la revendication 8, caractérisé en ce que des étranglements (rétrécissements 27, 28) sont prévus dans des parties montantes (25, 26) de la conduite de recirculation du condensat (5, 8) pour l'amoindrissement des bulles d'air.

16. Dispositif selon la revendication 8, caractérisé en ce qu'une cloison intermédiaire (29) est disposée dans le haut de l'échangeur de chaleur résiduelle (4) pour la répartition uniforme du condensat entre les conduites du retour de chauffage.

# Fig.1

# Fig.2

Abgas
gereinigt

MgO oderNa₂O

11

8

9

4

19

18

7

8

3

5

6

15

17

16

Abgas

14

Heizungsrücklauf

Luft

13

Luft

13

Abwasser

Abwasser
mit MgSO₄ o.
Na₂SO₄ gelöst

# Fig.3

Abgas
gereinigt

11

8

9

MgO

4

7

8

3

5

6

15

CaO

21

15

Abwasser

17

16

Abgas

14

Heizungsrücklauf

Luft

13

Abw.

CaSO₄ u.Mg(OH)₂

# Fig.4